# EUROPEAN PATENT SPECIFICATION

(11) **EP 1 371 668 B1**
(45) Date of publication and mention of the grant of the patent: **02.02.2011**
(21) Application number: 01981105.8
(22) Date of filing: 13.11.2001
(51) Int. Cl.: C08J 3/26, C08F 2/16

(54) **CROSSLINKED RESIN PARTICLES, CROSSLINKED RESIN PARTICLE EMULSION FOR USE IN PRODUCING THE CROSSLINKED RESIN PARTICLES, AND METHOD FOR PRODUCING THE CROSSLINKED RESIN PARTICLES**
"TEILCHEN AUS VERNETZTEM HARZ, DISPERSION VON TEILCHEN AUS VERNETZTEM HARZ ZUR VERWENDUNG BEI DER HERSTELLUNG DER TEILCHEN AUS VERNETZTEM HARZ UND VERFAHREN ZUR HERSTELLUNG DER TEILCHEN AUS VERNETZTEM HARZ"
PARTICULES DE RESINE RETICULEES, EMULSION DE PARTICULES DE RESINE RETICULEES DESTINEE A ETRE UTILISEE LORS DE LA PRODUCTION DESDITES PARTICULES DE RESINE RETICULEES ET PROCEDE POUR PRODUIRE LESDITES PARTICULES DE RESINE RETICULEES

(30) Priority: 22.11.2000 JP 2000356029
(43) Date of publication of application: 17.12.2003
(73) Proprietor: SEKISUI CHEMICAL CO., LTD., Osaka-shi, Osaka 530-8565 (JP)
(72) Inventor: YAMAUCHI, Hiroshi, Shinnanyo-shi, Yamaguchi 746-0006 (JP); OHMURA, Takahiro,, Shinnanyo-shi, Yamaguchi 746-0006 (JP)
(74) Representative: Lees, Kate Jane
(86) International application number: PCT/JP2001/009928
(87) International publication number: WO 2002/042338

(56) References cited:
- EP-A- 0 250 887
- EP-A- 0 644 205
- JP-A- 1 182 313
- JP-A- 3 079 604
- JP-A- 5 320 212
- JP-A- 8 073 537
- JP-A- 9 157 307
- JP-A- 2001 081 114
- JP-A- 2001 294 604
- PATENT ABSTRACTS OF JAPAN vol. 0152, no. 48 (C-0843), 25 June 1991 (1991-06-25) & JP 3 079604 A (JAPAN SYNTHETIC RUBBER CO LTD), 4 April 1991 (1991-04-04)

## Description

### Technical Field

The present invention relates to fine crosslinked-resin particles used as a flow modifier to modify the fluidity of e.g. toners, print inks, paints, and adhesives; to fine crosslinked-resin particle emulsion used for producing the fine crosslinked-resin particles; and to a method for producing the fine crosslinked-resin particles.

### Background Art

Fine crosslinked-resin particles having a high degree of crosslinking and good mechanical strength, heat resistance and solvent resistance are being widely demanded as a flow modifier to modify the fluidity of e.g. toners, print inks, paints, and adhesives. In general, the fine crosslinked-resin particles are produced in a suspension polymerization method or a dispersion polymerization method, but the currently available fine crosslinked-resin particless are not satisfactory in mechanical strength, heat resistance, solvent resistance, particle diameter, and particle diameter distribution.

In the suspension polymerization method, grease spots of crosslinkable monomer are suspended in aqueous medium by a mechanical force, for polymerization, to produce the fine crosslinked-resin particles. However, due to the grease spots of crosslinkable monomer being suspended in the aqueous medium by the mechanical force, the particle diameter of the fine crosslinked-resin particles obtained is unevenly distributed in a wide range from 1 to 50 µm, thus requiring the classification operation. If fine crosslinked-resin particles having a narrow particle diameter distribution range are tried to be produced by employing this method, there arises the problem that the yield is significantly lowered.

A method for producing the fine crosslinked-resin particles by employing the dispersion polymerization method is disclosed by Japanese Laid-open (Unexamined) Patent Publication No. Hei 5(1993)-178912, for example. This publication discloses "the method for producing particles of crosslinked polymer (fine crosslinked-resin particles) wherein not more than 30 weight% of polymerizable vinyl monomer soluble in the water containing not less than 20 weight% of crosslinking vinyl monomer is dispersed for polymerization in the solvent in which raw material of vinyl monomer is dissolved but target polymer is not dissolved in the presence of a dispersion stabilizer and a radical polymerization initiator".

However, since this method disclosed by the publication cited above produces the fine crosslinked-resin particles having a particle diameter of the order of 0.4 µm at the smallest, it is practically impossible to provide a controlled particle diameter in the submicron region. In addition, "the solvent in which raw material of vinyl monomer is dissolved but target polymer is not dissolved" defined therein substantially indicates an organic solvent, such as alcohol, octane, toluene and xylene. Accordingly, this method involves the problems including a safety problem involved in the removal of the solvent (organic solvent), an environmental pollution problem resulting from a large quantity of organic gas generated when drying the organic solvent, and a significant increase of production cost resulting from the use of the organic solvent.

Thus, in the case of the currently available fine crosslinked-resin particles, it is difficult to produce fine crosslinked-resin particles having a narrow particle diameter distribution range, a small mean particle diameter, and such a high degree of crosslinking that good mechanical strength, heat resistance and solvent resistance can be developed, without the classification operation. Also, there is a limit to the classification operation to narrow the particle diameter distribution range.

In the light of the problems mentioned above, the present invention has been made. It is an object of the present invention to provide fine crosslinked-resin particles that have a uniform and narrow particle diameter distribution as well as a small mean particle diameter and also have such a high degree of crosslinking that good mechanical strength, heat resistance and solvent resistance can be developed. It is another object of the present invention to provide fine crosslinked-resin particle emulsion used to produce the fine crosslinked-resin particles without harming the environment and without employing the classification operation. It is still another object of the present invention to provide a method for producing the fine crosslinked-resin particles.

### Disclosure of the invention

The present invention provides fine crosslinked-resin emulsion, produced by ethylenic unsaturated monomers, which contain not less than 20 weight % of monomer having at least three ethylenic unsaturated groups in a molecule, the solubility of the monomer to water being 5 weight % or less (25°C), being previously emulsified and dispersed in a dispersion medium containing water as its major component, wherein the emulsified dispersion liquid is dropped in a polymerization reaction system including polymerization initiator to be subjected to emulsion polymerization or soap-free polymerization so as to satisfy the relationship of S≤T/60 between a total quantity T(g) of the ethylenic unsaturated monomer and a dropping speed (S(g/min.).

Fine crosslinked-resin particles obtained by drying emulsion have a mean particle diameter in the range of not less than 0.01 µm to not more than 0.30 µm and prepared such that when 10g of powders comprising the fine crosslinked-resin particles and 20g of iron powders are put in a 300ml glass ball mill container containing 5g of polyamide ball of a diameter of 2mm, 10g of polyamide ball of a diameter of 5mm and 10g of polyamide ball of diameter of 10mm and are agitated and mixed by rotating the ball mill container at a rotation speed of 100rpm for 30 minutes and, then, the mixed powders are taken out from the ball mill container and are observed by an electron microscope, not more than two defective fine crosslinked-resin particles are observed out of twenty five crosslinked-resin particles arbitrarily selected from the mixed powders.

In the fine crosslinked-resin particles of the present invention, no particle limitation is imposed on the polyamide (nylon)-based resin ball used in the ball mill container, as long as it is a polyamide (nylon)-based resin such as nylon 6 and nylon 6, 6.

Preferably, the iron powders have a mean particle diameter of 20-200 µm, though no particle limitation is imposed thereon.

In the fine crosslinked-resin particles emulsion of the present invention, "the ethylenic unsaturated group" is intended to mean or cover a group comprising a double-bond structure of carbon.

It is preferable that the water used as the dispersion medium in the polymerization is ion exchange water or purified water. "The dispersion medium containing water as its major component" is intended to mean or cover the water itself or a mixed aqueous solution of water and a surface-active agent, an emulsifying agent, or water-soluble polymeric protective colloid such as polyvinyl alcohol.

Although no particular limitation is imposed on a quantity of dispersion medium used, not less than 100 parts by weight, preferably 200-10,000 parts by weight, or further preferably 300-2,000 parts by weight, of dispersion medium per 100 parts by weight of ethylenic unsaturated monomer is preferable, as mentioned later.

When less than 100 parts by weight of dispersion medium per 100 parts by weight of ethylenic unsaturated monomer is used, the fine crosslinked-resin particles in the fine crosslinked-resin particle emulsion obtained may be aggregated irregularly or may be fused together, so that they may not be evenly distributed in a narrow particle diameter distribution and may not have a small mean particle diameter.

The surface-active agent, the emulsifying agent or the water-soluble polymeric protective colloid used may be of reactivity-type or non-reactivity-type, as long as they do not hinder the accomplishment of the objects. Also, the surface-active agent, the emulsifying agent or the water-soluble polymeric protective colloid may be used singly or in combination of two or more.

The reactive-type surface-active agents that may be used include, for example, anionic reactivity-type surface-active agent and nonionic reactivity-type surface-active agent to which a radical polymerizable propenyl group is introduced. The non-reactivity-type surface-active agents that may be used include, for example, straight-chain alkyl benzene sulfonate and straight-chain alkyl sulfonate. The reactive-type surface-active agents and the non-reactivity-type surface-active agents may be used singly or in combination of two or more.

The monomer having at least three ethylenic unsaturated groups in the molecule mentioned above functions as the crosslinkable monomer to enhance a degree of crosslinking of the fine crosslinked-resin particles to forming the fine crosslinked-resin particle emulsion obtained and thus contributes to improvement in mechanical strength, heat resistance and solvent resistance.

The monomers having at least three ethylenic unsaturated groups in the molecule that may be used include, for example, trimethylolpropane tri(meth)acrylate, tetramethylol methane tri(meth)acrylate, tetramethylolpropane tri(meth)acrylate, and tetramethylolpropane tetra(meth)acrylate. These monomers having at least three ethylenic unsaturated groups in the molecule may be used singly or in combination of two or more. The term "(meth)acrylate" defined herein is intended to mean acrylate or methacrylate.

The ethylenic unsaturated monomer used in the present invention is required to contain not less than 20 weight%, preferably not less than 25 weight%, or further preferably not less than 30 weight%, of monomer having at least three ethylenic unsaturated groups in the molecule.

When a quantity of monomers having at least three ethylenic unsaturated groups in the molecule contained in the ethylenic unsaturated monomers are less than 20 weight%, the fine crosslinked-resin particles having a desired particle diameter distribution and a desired mean particle diameter can be obtained, but, since the fine crosslinked-resin particles are not crosslinked sufficiently, the required mechanical strength, heat resistance and solvent resistance may not be obtained, so that the fine crosslinked-resin particles obtained may have a restricted range of applications in industry fields.

Monomers having ethylenic unsaturated group in the molecule that may be used in combination with the monomer having the at least three ethylenic unsaturated groups in the molecule to form the ethylenic unsaturated monomer include, for example, stylene monomer and acrylic monomer. The monomers having the ethylenic unsaturated group in the molecule may be used singly or in combination of two or more, as long as they are hardly soluble in water.

The stylene monomers that may be used include, for example, stylene, α-methylstylene, β-methylstylene, o-methylstylene, m-methylstylene, p-methylstylene, p-ethylstylene, 2,4-dimethylstylene, 2,5-dimethylstylene, 3,4-dimethylstylene, 3,5-dimethylstylene, 2,4,5-trimethylstylene, 2,4,6-trimethylstylene, p-n-butylstylene, p-t-butylstylene, p-n-hexylstylene, p-n-octylstylene, p-n-dodecylstylene, p-methoxylene, p-phenylstylene, p-chlorostylene, and 3,4-dichlorostylene. Among others, stylene is prefereably used, These stylene monomers may be used singly or in combination of two or more.

The acrylic monomers that may be used include, for example, alkyl (meth) acrylate, such as methyl (meth)acrylate, ethyl (meth) acrylate and n-butyl (meth) acrylate, acrylic acid, methacrylic acid, acrylonitrile, and acrylamide. Among other, n-butylacrylate is prefereably used. These acrylic monomers may be used singly or in combination or two or more.

The ethylenic unsaturated monomer used in the present invention is required to be hardly soluble in water. To be more specific, the solubility (25°C) of the ethylenic unsaturated monomer to water is 5 weight % or less, or further preferably 1 weight % or less.

When the solubility (25°C) of the ethylenic unsaturated monomner to water exceeds 20 weight %, the particles may aggeatate or swell irregularly in polymerization, so that the fine crosslinked-resin particles having a uniform and narrow particle distribution and a small mean particle diameter may not be obtained.

In the polymerization of the fine crosslinked-resin particle emulsion of the present invention, a polymerization initiator may be used to induce and promote a radical polymerization reaction of the ethylenic unsaturated monomer.

The polymerization initiators that may be used include, for example, hydrogen peroxide solution and persulfate, such as ammonium persulfate, potassium persulfate, and sodium persulfate. These polymerization initiators may be used singly or in combination of two or more.

The fine crosslinked-resin particle emulsion of the present invention can be produced, for example, in the following procedures, though no particular limitation is imposed on the method.

That is to say, after a prescribed quantity of dispersion medium containing water as its major component is charged in a reaction vessel, such as a separable flask, equipped with an agitator, a dropping funnel, a nitrogen lead-in tube and a reflux condenser and then is heated to a predetermined temperature in a stream of an inert gas, such as nitrogen gas, with stirring in a certain condition, a prescribed quantity of polymerization initiator is added. Then, after a prescribed quantity of ethylenic unsaturated monomer is dropped in the polymerization reaction system via the dropping funnel at a predetermined speed, the temperature of the polymerization reaction system is kept at a predetermined temperature for an emulsion polymerization reaction or a soap-free polymerization reaction for a predetermined time to produce a desired fine crosslinked-resin particle emulsion.

The temperature required for the polymerization reaction is preferably in the range of 40°C to 90°C, or preferably 50°C to 80°C, though no particular limitation is imposed thereon. Also, the time required for the polymerization reaction is preferably in the range of 2 to 30 hours, or preferably 4 to 12 hours, though no particular limitation is imposed thereon.

It is preferable that the fine crosslinked-resin particle emulsion of the present invention is produced in such a way that before initiation of the polymerization, at least a part of the ethylenic unsaturated monomers are emulsified and dispersed in a part of the dispersion medium containing water as its major component to produce emulsified dispersion liquid of the ethylenic unsaturated monomer, first, and then, the emulsified dispersion liquid thus produced is added in the polymerization reaction system simultaneously or separately or is dropped therein at a predetermined dropping speed.

The emulsification and dispersion of the ethylenic unsaturated monomers can be done by using a usual emulsification dispersion device such as a homogenizer. Although no particular limitation is imposed on a proportion of the dispersion medium containing water as its major component to the ethylenic unsaturated monomer, 30-2,000 parts by weight, or preferably 100-300 parts by weight, of dispersion medium per 100 parts by weight of ethylenic unsaturated monomer is preferable.

By employing the method that before initiation of the polymerization, at least a part of the ethylenic unsaturated monomers are added or dropped in the polymerization reaction system in the form of the emulsified dispersion liquid, the fine crossliked-resin particle emulsion comprising the fine crosslinked-resin particles having a more uniform and narrower particle diameter distribution as well as a smaller mean particle diameter and being crosslinked to a higher crosslinking extent can be obtained easily and stably at low cost.

In the fine crosslinked-resin particle emulsion of the present invention, the ethylenic unsaturated monomers are dropped to satisfy the relationship of S≦T/60 between a total quantity T(g) of the ethylenic unsaturated monomer and a dropping speed S(g/min.). This means that it is preferable to drop the total quantity of etylenic unsaturated monomers gradually for 60 minutes or more, or preferably for 120-360 minutes.

This means that by employing the method of dropping the total quantity of ethylenic unsaturated monomers gradually for 60 minutes or more, the fine crosslinked-resin particle emulsion comprising the fine crosslinked-resin particles having a more uniform and narrower particle diameter distribution as well as a smaller mean particle diameter and being crosslinked to a higher crosslinking extent can be obtained easily and stably at low cost.

Further, in the fine crosslinked-resin particle emulsion of the present invention, it is preferable that 1-80 weight% of the ethylenic unsaturated monomers are previously polymerized and, then, a remaining quantity of the ethylenic unsaturated monomers are added in the emulsified and dispersed state or is dropped gradually for 30 minutes or more.

By employing this method, the fine crosslinked-resin particle emulsion comprising the fine crosslinked-resin particles having a more uniform and narrower particle diameter distribution as well as a smaller mean particle diameter and being crosslinked to a higher crosslinking extent can be obtained easily and stably at low cost.

It is preferable that the crosslinked-resin particles in the crosslinked-resin particle emulsion of the present invention have a mean particle diameter in the range of 0.01 µm-0.30 µm.

The mean particle diameter defined herein is intended to mean a mean particle diameter measured in the following method.

### [Measuring method of the mean particle diameter]

The mean particle diameter of the fine crosslinked-resin particles in the fine crosslinked-resin particle emulsion diluted with ion exchanged water or purified water is measured with a particle size analyzer using laser diffraction scattering and the mean particle diameter is defined by the volume mean particle diameter measured. A concrete example of the particle size analyzer is "Microtrac UPA particle size analyzer" (Brand name) available from Nikiso Co., Ltd..

In the case where the mean particle diameter of the fine crosslinked-resin particles forming the fine crosslinked-resin particle emulsion is less than 0.01 µm, when the fine crosslinked-resin particles obtained from the fine crosslinked-resin particle emulsion are used as the flow modifier to modify the fluidity of e.g. toners, print inks, paints, and adhesives, a satisfactory fluidity modifying effect may not be produced. On the other hand, in the case where the mean particle diameter of the fine crosslinked-resin particles exceeds 0.30 µm, for example when the fine crosslinked-resin particles are used as the flow modifier to modify the fluidity of toners, they may serve as noises to exert an undesirable effect on an image formed from the toners.

The fine crosslinked-resin particle producing method of the present invention is characterized in that the fine crosslinked-resin particles are obtained by drying the fine crosslinked-resin particle emulsion of the present invention mentioned above.

Any drying method may be used to dry the fine crosslinked-resin particle emulsion, as long as it can allow the fine crosslinked-resin particles to be substantially kept in their spherical form. The drying methods that may be used include, for example, a spray-drying method using a spray dryer, a freeze-drying method using a freeze dryer, a hot-air-drying method, and a vacuum-drying method. Among others, the spray-drying method and the freeze-drying method are preferable in terms of excellence in productivity. A concrete example of a preferable spray dryer used in the spray-drying method is a spray dryer having four fluid nozzles, such as "MDL-050" and "MDP-050" (Brand name) available from Fujisaki electric co., ltd..

Although the fine crosslinked-resin particles of the present invention have a small mean particle diameter, since they have a high resin strength, they serve as an excellent flow modifier in that the particles are evenly dispersed easily and are nonbreakable.

The fine crosslinked-resin particles of the present invention are particularly excellent as the flow modifier to be added to non-magnetic toners or binary magnetic toners. Specifically, in the case of the non-magnetic toners, since the toner resin particles are electrostatically charged and thus are subjected to strong external force, the flow modifier must be prevented from being broken. On the other hand, in the case of the binary magnetic toners, when the carrier, such as iron powder, and the flow modifier are mixed, the flow modifier must be prevented from being broken during the mixture. For this reason, inorganic rigid particles such as silica are widely used as the flow modifier.

However, the flow modifier comprising the inorganic rigid particles has the problem that the particles are buried in the surfaces of the toner resin particles to cause reduction in fluidity of the toners. Also, a flow modifier comprising fine acrylic-resin particles is available as a flow modifier comprising currently available resin particles. However, this flow modifier is so low in resin strength that it is not applicable to the binary magnetic toners.

In contrast to this, the fine crosslinked-resin particles of the present invention are hardly broken even when mixed with the carrier such as the iron powder. Additionally, because of the flow modifier comprising the fine resin particles, the resin particles are not so rigid as the inorganic particle, so that they are hardly buried in the surfaces of the resin particles of the toners, thus preventing the reduction in fluidity of the toners.

On the other hand, in the fine crosslinked-resin particle emulsion of the present invention, since the ethylenic unsaturated monomer, which contains not less than 20 weight% of monomer having at least three ethylenic unsaturated groups in the molecule serving as the crosslinkable monomer and also is hardly soluble in water, is polymerized in its dispersed state in the dispersion medium containing water as its major component, the particles having a small mean particle diameter can be obtained in a narrow particle diameter distribution range.

In the dispersion polymerization in which the ethylenic unsaturated monomers serving as the material forming the particles are dissolved in the dispersion medium, the monomers having at least three ethylenic unsaturated groups in the molecule of relatively high reactivity are liable to be consumed in the first half of the polymerization reaction. As a result, the monomers are reduced in concentration in the second half of the polymerization reaction, so that the degree of crosslinking of the fine crosslinked-resin particles polymerized in the second half of the polymerization reaction is apt to reduce. However, since the ethylenic unsaturated monomers serving as the material forming the particles are not dissolved in the dispersion medium but are dispersed therein in the form of liquid droplets, the monomers having the at least three ethylenic unsaturated groups in the molecule can always be kept in high concentration.

This can produce the result that the fine crossliked-resin particles obtained are fine crosslinked-resin particles having a high degree of crosslinking such that the mechanical strength, heat resistance, and solvent resistance can be satisfactorily developed, with few particles of a low degree of crosslinking contained.

Also, by employing the method that at least a part of the ethylenic unsaturated monomers are added or dropped in the form of the emulsified dispersion liquid previously prepared, the method that the total quantity of ethylenic unsaturated monomers are gradually dropped for 60 minutes or more, or the method that 1-80 weight% of the ethylenic unsaturated monomers are previously polymerized and, then, a remaining quantity of the ethylenic unsaturated monomers are added in the previously emulsified and dispersed state or are dropped gradually for 30 minutes or more, the fine crossliked-resin particle emulsion comprising the fine crosslinked-resin particles having a more uniform and narrower particle diameter distribution as well as a smaller mean particle diameter and being crosslinked to a higher crosslinking extent can be obtained easily and stably at low cost.

Further, by the fine crosslinked-resin particles of the crosslinked-resin particle emulsion being made to have a mean particle diameter in the range of 0.01 µm-0.30 µm, the fine crosslinked-resin particles that are particularly suitably used as the flow modifier to modify the fluidity of toners, print inks, paints, adhesives and equivalent can be obtained.

In the fine crosslinked-resin particle producing method of the present invention, since the fine crosslinked-resin particles are produced by drying the fine crosslinked-resin particle emulsion of the present invention mentioned above, the fine crosslinked-resin particles that have such a high degree of crosslinking that good mechanical strength, heat resistance and solvent resistance can be developed and also have a uniform and narrow particle diameter distribution as well as a small mean particle diameter can be obtained.

### Best Mode for Carrying out the Invention

While in the following, the present invention will be described in further detail with reference to Examples, the present invention is not limited thereto.

### (Comparative Example 1)

1,044g of ion exchanged water and 24g of 10 weight% aqueous solution of sodium dodecylbenzenesulfonate used as the surface-active agent were charged in a 2-liter separable flask equipped with an agitator, a dropping funnel, a nitrogen lead-in tube and a reflux condenser and then were heated to 70°C in a stream of a nitrogen gas, with stirring in a certain condition. After 30 minutes passed, 0.6g of ammonium persulfate used as the polymerization initiator was added. Then, after 120g of divinylbenzene of not more than 1 weight% in water solubility (25°C), used as the monomer having two ethylenic unsaturated groups in the molecule, was dropped into the polymerization reaction system from the dropping funnel at a speed of 0.7g/min., for polymerization reaction. With the temperature of the polymerization reaction system kept at 70°C, the dropping of the divinylbenzene was ended in about 3 hours, while the polymerization reaction was continued for another 3 hours. After this manner, a fine crosslinked-resin particle emulsion was produced. When the mean particle diameter of the fine crosslinked-resin particles in the fine crosslinked-resin particle emulsion thus produced was measured with "Microtrac UPA particle size analyzer" (Brand name) available from Nikiso Co., Ltd. by using the measuring method mentioned above, the mean particle diameter of the fine crosslinked-resin particles was 0.08 µm.

Sequentially, the fine crosslinked-resin particle emulsion produced was dried at 60°C in the spray-drying method using the spray dryer of "MDL-050" (Brand name) available from fujisaki electric co., ltd., to obtain white powdery substance comprising the fine crosslinked-resin particles.

### (Example 1)

828g of ion exchanged water was charged in the 2-liter separable flask equipped with the agitator, the dropping funnel, the nitrogen lead-in tube and the reflux condenser and then was heated to 70°C in a stream of a nitrogen gas, with stirring in a certain condition. After 30 minutes passed, 0.6g of ammonium persulfate used as the polymerization initiator was added. Then, 108g of emulsified dispersion liquid obtained by emulsifying 54g of ion exchanged water, 36g of tetramethylolpropane triacrylate of not more than 1 weight% in water solubility (25°C) used as the monomer having at least three ethylenic unsaturated groups in the molecule, and 18g of a 10 weight% aqueous solution of sodium dodecylbenzene sulfonate by using the homogenizer were added simultaneously. Thereafter, with the temperature of the polymerization system kept at 70°C, the polymerization reaction was performed for about 3 hours. Then, 252g of emulsified dispersion liquid obtained by emulsifying 126g of ion exchanged water, 84g of trimethylolpropane triacrylate of not more than 1 weight% in water solubility (25°C) used as the monomer having at least three ethylenic unsaturated groups in the molecule, and 42g of a 10 weight% aqueous solution of sodium dodecylbenzene sulfonate by using the homogenizer was dropped from the dropping funnel at a speed of 1g/min. The dropping was ended in about four hours, while the polymerization reaction was continued for another 2 hours. After this manner, a fine crosslinked-resin particle emulsion was produced. When the mean particle diameter of the fine crosslinked-resin particles in the fine crosslinked-resin particle emulsion thus produced was measured in the same manner as in Comparative Example 1, the mean particle diameter of the fine crosslinked-resin particles was 0.08 µm.

Sequentially, the fine crosslinked-resin particle emulsion produced was freeze-dried by using the freeze-dryer, to obtain white powdery substance comprising the fine crosslinked-resin particles.

### (Comparative Example 2)

100g of divinylbenzene composition of not more than 1 weight% in water solubility (25°C) comprising 55 weight% of divinylbenzene, 41 weight% of ethylvinylbenzene, and 4 weight% of p-diethylbenzene, 22g of polyvinylpyrrolidone, 10g of 2,2'-azobisisobutyronitrile, 0.5g of benzoyl peroxide, and 1,100g of methanol were charged in a 3-liter separable flask equipped with the agitator, the dropping funnel, the nitrogen lead-in tube and the reflux condenser and then were heated to 70°C in a stream of a nitrogen gas, with stirring in a certain condition, to initiate the polymerization reaction. Thereafter, with the temperature of the polymerization reaction system kept at 70°C, the polymerization reaction was continued for about 24 hours. After this manner, a fine crosslinked-resin particle emulsion was produced. When the mean particle diameter of the fine crosslinked-resin particles in the fine crosslinked-resin particle emulsion thus produced was measured in the same manner as in Comparative Example 1, the mean particle diameter of the fine crosslinked-resin particles was 1.30 µm. Sequentially, the fine crosslinked-resin particle emulsion produced was dried in the same spray-drying method as in Comparative Example 1, to obtain white powdery substance comprising the fine crosslinked-resin particles.

### (Comparative Example 3)

200g of ion exchanged water and 3g of sodium dodecylsulfate were charged in an 1-liter separable flask equipped with the agitator, the dropping funnel, the nitrogen lead-in tube and the reflux condenser and then were heated to 80-85°C with a nitrogen gas aerated. Then, 1g of ammonium persulfate was added with stirring. Then, 100g of ethylenic unsaturated monomer of not more than 1 weight% in water solubility (25°C) comprising 60g of methylmethacrylate, 20g of n-butylacrylate, 10g of styrene, and 10g of ethylene glycol dimethacrylate used as the monomer having two ethylenic unsaturated groups in the molecular was simultaneously added for the polymerization reaction for an hour. After this manner, the fine crosslinked-resin particle emulsion was produced. When the mean particle diameter of the fine crosslinked-resin particles in the fine crosslinked-resin particle emulsion thus produced was measured in the same manner as in Comparative Example 1, the mean particle diameter of the fine crosslinked-resin particles was 0.10 µm. Sequentially, the fine crosslinked-resin particle emulsion produced was dried in the same spray-drying method as in Comparative Example 1, to obtain white powdery substance comprising the fine crosslinked-resin particles.

### (Comparative Example 4)

400g of ion exchanged water, 100g of ethylenic unsaturated monomer of not more than 1 weight% in water solubility (25°C) comprising 91g of styrene, and 9g of methylmethacrylate and 0.05g of sodium dodecylbenzene sulfonate were charged in the 3-liter separable flask equipped with the agitator, the dropping funnel, the nitrogen lead-in tube and the reflux condenser and then were heated to 75°C with stirring. Then, 0.5g of potassium persulfate was added and stirred at 75°C for 8 hours for the polymerization reaction. After this manner, the fine crosslinked-resin particle emulsion was produced. When the mean particle diameter of the fine crosslinked-resin particles in the fine crosslinked-resin particle emulsion thus produced was measured in the same manner as in Example 1, the mean particle diameter of the fine crosslinked-resin particles was 0.35 µm. Sequentially, the fine crosslinked-resin particle emulsion produced was dried in the same spray-drying method as in Example 1, to obtain white powdery substance comprising the fine crosslinked-resin particles.

### (Comparative Example 5)

1,044g of ion exchanged water and 24g of 10 weight% aqueous solution of sodium dodecylbenzenesulfonate were charged in the 2-liter separable flask equipped with the agitator, the dropping funnel, the nitrogen lead-in tube and the reflux condenser and then were heated to 70°C in a stream of a nitrogen gas, with stirring in a certain condition. After 30 minutes passed, 0.6g of ammonium persulfate was added. Then, after 120g of polyethylene glycol diacrylate (EG value: 9) in excess of 20 weight% in water solubility (25°C) was dropped from the dropping funnel at a speed of 0.7g/min., for the polymerization reaction. Thereafter, with the temperature of the polymerization reaction system kept at 70°C, the dropping of the polyethylene glycol diacrylate was ended in about 3 hours, while the polymerization reaction was continued for another 3 hours. In this method, since all polymers were aggregated during the polymerization reaction, no good fine crosslinked-resin particle emulsion was obtained, nor could measure the mean particle diameter of the fine crosslinked-resin particles.

### [Evaluation]

① A quantity of coagulated material in the fine (crosslinked-)resin particle emulsion, ② solvent resistance, and ③ mechanical strength of the fine crosslinked-resin particles obtained in Example 1 and Comparative Examples 1 to 5 were evaluated in the following way. As for Comparative Example 5, ② the solvent resistance and ③ the mechanical strength thereof could not be evaluated, however. The evaluation results are shown in TABLE 1
① A quantity of coagulated material: After completion of the polymerization reaction, all contents in the separable flask were put through a SUS screen (165 mesh, Opening of screen: 100 µm) and then the remaining material on the screen was dried by a vacuum dryer for 24 hours and then was weighed. A proportion of the weight of the remaining material to a total quantity of the charged monomers was calculated to determine the quantity of coagulated material (weight%).
② Solvent resistance: 0.3g of fine (crosslinked-)resin particles was checkweighed and charged into 30g of toluene with stirring. After 24 hours passed, the mixture was centrifuged by a centrifugal machine at a revolution speed of 10,000rpm. for 5 minutes, to remove the clear supernatent liquid. Sequentially, after the precipitate was dried by the vacuum dryer, it was weighed and its solvent resistance was evaluated in accordance with the judging standard mentioned below.

### [Judging standard]

○ Weight of the dried precipitate was 0.09g or more
× Weight of the dried precipitate was in the range of 0.06g or more to less than 0.09g
Δ Weight of the dried precipitate was less than 0.06g

### ③ Mechanical strength

10g of powders of the fine crosslinked-resin particles obtained in each of Examples 1 and 2 and Comparative Examples 1 to 3 and 20g of iron powders having a mean particle diameter of 100 µm were put in a 300ml glass ball mill container containing 5g of polyamide ball of a diameter of 2mm, 10g of polyamide ball of a diameter of 5mm, and 10g of polyamide ball of a diameter of 10mm and were mixed with stirring by rotating the ball mill container at a rotation speed of 100rpm. In the mixing operation, the mixed powders were sometimes taken out from the ball mill container, to observe the pulverization status of the mixed powders by an electron microscope. When three or more fine crosslinked-resin particles having some deficit such as a crack and a fracture were observed by electron microscopy, the ball mill was stopped. When the ball mill was stopped within 30 minutes, the time for which the ball mill was in operation was shown in TABLE 1. ○ represents that no fine crosslinked-resin particles having the deficit was observed when the ball mill was driven for 30 minute. Δ represents that a predetermined number or more of fine crosslinked-resin particles having the deficit were observed when the ball mill was driven for 5-30 minutes. × represents that more than a predetermined number of fine crosslinked-resin particles having the deficit were observed within a time less than 5 minutes from the start of the drive of the ball mill.

**(TABLE 1)**

| | | Example | Comparative Example | | | | |
|---|---|---|---|---|---|---|---|
| | | 1 | 1 | 2 | 3 | 4 | 5 |
| A content of monomer having at 2 ethylenic least unsaturated groups in the molecule in a total of monomers (Weight%) | | 100 | 100 | 55 | 10 | 0 | 100 |
| Soludivility of ethylenic unsaturated monomer to water (25°C, Weight%) | | 1 or less | 1 or less | 1 or less | 1 or less | 1 or less | In excess of 20 |
| Mean particle diameter of fine crosslinked-resin particle (µm) | | 0.08 | 0.08 | 1.30 | 0.10 | 0.35 | Off the measurement |
| Evaluation | Quantity of coagulated material (weight%) | 0 | 1 | 0 | 10 | 1 | 100 |
| | Solvent resistance | ○ | ○ | ○ | Δ | × | Off the measurement |
| | Operating time of Ball mill (min.) | >30 | >30 | >30 | 5 | 1 | Off the measurement |
| | Mechanical strength | ○ | ○ | ○ | Δ | × | ×× |

As evident from TABLE 1, the fine crosslinked-resin particles of Example 1 and Comparative Example 1 according to the present invention produced almost no coagulated material at the polymerization reaction. Also, all the fine crosslinked-resin particles obtained from that emulsion developed excellent solvent resistance and mechanical strength.

In contrast to this, in Comparative Example 2 wherein the fine crosslinked-resin emulsion was subjected to the polymerization reaction by using methanol as the dispersion medium, rather than by using the dispersion medium containing water as its major component, the fine crosslinked-resin particles forming the fine crosslinked-resin emulsion had a large mean particle diameter (1.30 µm). For example when these fine crosslinked-resin particles are used as the flow modifier to modify the toners, there is the possibility that the fine crosslinked-resin particles may serve as noises to exert an undesirable effect on an image formed from the toners.

In Comparative Example 3 wherein the fine crosslinked-resin particle emulsion had a content of the monomer having two ethylenic unsaturated groups in the molecule (ethylene glycol dimethacrylate) in the ethylenic unsaturated monomers of less than 20 weight% (10 weight%), a quantity of coagulated material produced in the polymerization reaction was increased. Also, the fine crosslinked-resin particles obtained from the emulsion was inferior in solvent resistance and mechanical strength.

In Comparative Example 4 wherein the ethylenic unsaturated monomer containing no monomer having the at least two ethylenic unsaturated groups in the molecule was used in the fine crosslinked-resin particle emulsion, since the fine resin particles obtained from this fine crosslinked-resin particle emulsion were not crosslinked, their solvent resistance and mechanical strength were extremely bad.

Further, in Comparative Example 5 wherein ethylenic unsaturated monomer (polyethylene glycol diacrylate) having water solubility (25°C) of more than 20 weight% was used, since the polymers were all aggregated in the polymerization reaction, satisfactory fine crosslinked-resin particle emulsion could not be obtained.

### Capabilities of Exploitation in Industry

As mentioned above, the fine crosslinked-resin particles of the present invention have a uniform and narrow particle diameter distribution as well as a small mean particle diameter and also have such a high degree of crosslinking as to develop good mechanical strength, heat resistance and solvent resistance.

Therefore, the fine crosslinked-resin particles of the present invention are suitably used as the flow modifier to modify, for example, toners, print inks, paints, and adhesives. Among others, they are suitably used for binary magnetic toners, top coats for vehicles and the like.

On the other hand, the fine crosslinked-resin particle emulsion of the present invention is suitable for producing the fine crosslinked-resin particles having a uniform and narrow particle diameter distribution as well as a small mean particle diameter and also having such a high degree of crosslinking as to develop good mechanical strength, heat resistance and solvent resistance.

Further, since the polymerization reaction to produce the fine crosslinked-resin particles is caused in the dispersion medium containing water as its major component without using any organic solvent, no problems involved in use of the organic solvent, such as a safety problem and an environmental pollution problem, are presented and no significant increase of production cost of the fine crosslinked-resin particles is provided.

In addition, according to the fine crosslinked-resin particle producing method of the present invention, since the fine crosslinked-resin particle emulsion is dried, the fine crosslinked-resin particles of the present invention which have a uniform and narrow particle diameter distribution as well as a small mean particle diameter and also have such a high degree of crosslinking that good mechanical strength, heat resistance and solvent resistance are developed can be produced stably.

## Claims

1. Fine crosslinked-resin particle emulsion produced by ethylenic unsaturated monomers, which contain not less than 20 weight% of monomer having at least three ethylenic unsaturated groups in a molecule, the solubility of the monomer to water being 5 weight % or less (25°C), being previously emulsified and dispersed in a dispersion medium containing water as its major component, wherein the emulsified dispersion liquid is dropped in a polymerization reaction system including polymerization initiator to be subjected to emulsion polymerization or soap-free polymerization so as to satisfy the relationship of S≤T/60 between a total quantity T(g) of the ethylenic unsaturated monomer and a dropping speed (S(g/min.).

2. Fine crosslinked-resin particle emulsion according to Claim 1, wherein the emulsified dispersion liquid is separately dropped in the polymerization reaction system including polymerization initiator.

3. Fine crosslinked-resin particle emulsion according to Claim 1, wherein 1-80 weight% of the ethylenic unsaturated monomers are previously polymerized and dispersed in a dispersion medium containing water as its major component and put in the polymerization reaction system including polymerization initiator, then, a remaining quantity of the ethylenic unsaturated monomers is added in the previously emulsified and dispersed state, and the emulsified dispersion liquid is separately dropped in the polymerization reaction system including polymerization initiator gradually for 30 minutes or more so to satisfy the relationship of S≤T/60 between a total quantity T(g) of the ethylenic unsaturated monomer and a dropping speed S(g/min.).

4. Fine crosslinked-resin particles obtained by drying the fine crosslinked-resin particle emulsion set force in any one of Claim 1, 2 and 3.

5. Fine crosslinked-resin particles according to Claim 4, which have a mean particle diameter in the range of not less than 0.01µm to not more than 0.03 µm and in which when 10g of powders comprising the fine crosslinked-resin particles and 20g of iron powders are put in a 300 ml glass ball mill container containing 5g of polyamide ball of a diameter of 2mm, 10g of polyamide ball of a diameter of 5mm and 10g of polyamide ball of a diameter of 10mm and are agitated and mixed by rotating the ball mill container at a rotation speed of 100rpm for 30 minutes and, then, the mixed powders are taken out from the ball mill container and are observed by an electron microscope, not more than two defective fine crosslinked-resin particles are observed out of 20 fine crosslinked-resin particles arbitrarily selected from the mixed powders.

6. A method for producing fine crosslinked-resin particle emulsion produced by ethylenic unsaturated monomers, which contain not less than 20 weight% of monomer having at least three ethylenic unsaturated groups in a molecule, the solubility of the monomer to water being 5 weight % or less (25°C), being previously emulsified and dispersed in a dispersion medium containing water as its major component, wherein the emulsified dispersion liquid is dropped in a polymerization reaction system including polymerization initiator to be subjected to emulsion polymerization or soap-free polymerization so to satisfy the relationship of S≤T/60 between a total quantity T(g) of the ethylenic unsaturated monomer and a dropping speed S(g/min.).

7. The method for producing the fine crosslinked-resin particle emulsion according to Claim 6, wherein the emulsified dispersion liquid is separately dropped in the polymerization reaction system including polymerization initiator.

8. The method for producing the fine crosslinked-resin particle emulsion according to Claim 6, wherein 1-80 weight% of the ethylenic unsaturated monomers are previously polymerized and dispersed in a dispersion medium containing water as its major component and put in the polymerization reaction system including polymerization initiator, then, a remaining quantity of the ethylenic unsaturated monomers is added in the previously emulsified and dispersed state, and the emulsified dispersion liquid is separately dropped in the polymerization reaction system including polymerization initiator gradually for 30 minutes or more so to satisfy the relationship of S≤T/60 between a total quantity T(g) of the ethylenic unsaturated monomer and a dropping speed S(g/min.).

## Patentansprüche

1. Emulsion von feinen vernetzten Harzteilchen, erzeugt durch ethylenische ungesättigte Monomere, die nicht weniger als 20 Gew.-% Monomer mit mindestens drei ethylenischen ungesättigten Gruppen in einem Molekül enthalten, wobei die Löslichkeit des Monomers in Wasser 5 Gew.-% oder weniger (bei 25°C) beträgt, wobei es zuvor in einem Dispersionsmedium emulgiert und dispergiert wird, das Wasser als seinen Hauptbestandteil enthält, wobei die emulgierte Dispersionsflüssigkeit in ein Polymerisationsreaktionssystem getropft wird, das Polymerisationsinitiator enthält, um einer Emulsionspolymerisation oder seifenfreien Polymerisation ausgesetzt zu werden, so daß die Beziehung S ≤ T/60 zwischen einer Gesamtmenge T (g) des ethylenischen ungesättigten Monomers und einer Tropfgeschwindigkeit S (g/min) erfüllt ist.

2. Emulsion von feinen vernetzten Harzteilchen nach Anspruch 1, wobei die emulgierte Dispersionsflüssigkeit getrennt in das Polymerisationsinitiator enthaltende Polymerisationsreaktionssystem getropft wird.

3. Emulsion von feinen vernetzten Harzteilchen nach Anspruch 1, wobei 1-80 Gew.-% der ethylenischen ungesättigten Monomere vorher in einem Dispersionsmedium polymerisiert und dispergiert werden, das Wasser als seinen Hauptbestandteil enthält, und in das Polymerisationsinitiator enthaltende Polymerisationsreaktionssystem eingebracht werden, dann eine Restmenge der ethylenischen ungesättigten Monomere in dem vorher emulgierten und dispergierten Zustand zugesetzt wird und die emulgierte Dispersionsflüssigkeit getrennt allmählich im Verlauf von 30 Minuten oder mehr so in das Polymerisationsinitiator enthaltende Polymerisationsreaktionssystem getropft wird, daß die Beziehung S ≤ T/60 zwischen einer Gesamtmenge T(g) des ethylenischen ungesättigten Monomers und einer Tropfgeschwindigkeit S (g/min) erfüllt ist.

4. Feine vernetzte Harzteilchen, die durch Trocknen der Emulsion von feinen vernetzten Harzteilchen nach einem der Ansprüche 1, 2 und 3 gewonnen werden.

5. Feine vernetzte Harzteilchen nach Anspruch 4, die einen mittleren Teilchendurchmesser im Bereich von nicht weniger als 0,01 µm bis nicht mehr als 0,03 µm aufweisen, und wobei, wenn 10g Pulver, das die feinen vernetzten Harzteilchen aufweist, und 20 g Eisenpulver in einen 300 ml-Behälter einer Glaskugelmühle eingebracht werden, der 5 g Polyamidkugeln von 2 mm Durchmesser, 10g Polyamidkugeln von 5 mm Durchmesser und 10 g Polyamidkugeln von 10 mm Durchmesser enthält, und durch Rotation des Kugelmühlenbehälters mit einer Umdrehungsgeschwindigkeit von 100 U/min 30 Minuten bewegt und vermischt werden und dann die vermischten Pulver aus dem Kugelmühlenbehälter entnommen und unter einem Elektronenmikroskop beobachtet werden, von 20 willkürlich aus den vermischten Pulvern ausgewählten feinen vernetzten Harzteilchen nicht mehr als zwei defekte feine vernetzte Harzteilchen beobachtet werden.

6. Verfahren zur Herstellung einer Emulsion von feinen vernetzten Harzteilchen, erzeugt durch ethylenische ungesättigte Monomere, die nicht weniger als 20 Gew.-% Monomer mit mindestens drei ethylenischen ungesättigten Gruppen in einem Molekül enthalten, wobei die Löslichkeit des Monomers in Wasser 5 Gew.-% oder weniger (bei 25°C) beträgt, wobei es zuvor in einem Dispersionsmedium emulgiert und dispergiert wird, das Wasser als seinen Hauptbestandteil enthält, wobei die emulgierte Dispersionsflüssigkeit in ein Polymerisationsreaktionssystem getropft wird, das Polymerisationsinitiator enthält, um einer Emulsionspolymerisation oder seifenfreien Polymerisation ausgesetzt zu werden, so daß die Beziehung S ≤ T/60 zwischen einer Gesamtmenge T (g) des ethylenischen ungesättigten Monomers und einer Tropfgeschwindigkeit S (g/min) erfüllt ist.

7. Verfahren zur Herstellung der Emulsion von feinen vernetzten Harzteilchen nach Anspruch 6, wobei die emulgierte Dispersionsflüssigkeit getrennt in das Polymerisationsinitiator enthaltende Polymerisationsreaktionssystem getropft wird.

8. Verfahren zur Herstellung der Emulsion von feinen vernetzten Harzteilchen nach Anspruch 6, wobei 1-80 Gew.-% der ethylenischen ungesättigten Monomere vorher in einem Dispersionsmedium polymerisiert und dispergiert werden, das Wasser als seinen Hauptbestandteil enthält, und in das Polymerisationsinitiator enthaltende Polymerisationsreaktionssystem eingebracht werden, dann eine Restmenge der ethylenischen ungesättigten Monomere in dem vorher emulgierten und dispergierten Zustand zugesetzt wird und die emulgierte Dispersionsflüssigkeit getrennt allmählich im Verlauf von 30 Minuten oder mehr so in das Polymerisationsinitiator enthaltende Polymerisationsreaktionssystem getropft wird, daß die Beziehung S ≤ T/60 zwischen einer Gesamtmenge T (g) des ethylenischen ungesättigten Monomers und einer Tropfgeschwindigkeit S (g/min) erfüllt ist.

## Revendications

1. Emulsion de fines particules de résine réticulées produite au moyen de monomères insaturés éthyléniques, qui ne contiennent pas moins de 20% en poids d'un monomère ayant au moins trois groupes insaturés éthyléniques dans une molécule, la solubilité du monomère dans l'eau étant de 5% en poids ou moins (25°C), préalablement émulsifié et dispersé dans un milieu de dispersion contenant de l'eau en tant que composant majeur dudit milieu, où le liquide de dispersion émulsifié est versé goutte à goutte dans un système de réaction de polymérisation comprenant un initiateur de polymérisation pour être soumis à une polymérisation en émulsion ou à une polymérisation sans savon de façon à satisfaire la relation S≤T/60 entre une quantité totale T(g) du monomère insaturé éthylénique et une vitesse de versement S(g/min).

2. Emulsion de fines particules de résine réticulées selon la revendication 1, dans laquelle le liquide de dispersion émulsifié est séparément versé goutte à goutte dans le système de réaction de polymérisation comprenant un initiateur de polymérisation.

3. Emulsion de fines particules de résine réticulées selon la revendication 1, dans laquelle 1-80% en poids des monomères insaturés éthyléniques sont préalablement polymérisés et dispersés dans un milieu de dispersion contenant de l'eau en tant que composant majeur dudit milieu et placés dans le système de réaction de polymérisation comprenant un initiateur de polymérisation, puis une quantité restante des monomères insaturés éthyléniques est ajoutée dans l'état préalablement émulsifié et dispersé, et le liquide de dispersion émulsifié est séparément versé progressivement goutte à goutte dans le système de réaction de polymérisation comprenant l'initiateur de polymérisation en l'espace de 30 minutes ou plus de façon à satisfaire la relation S≤T/60 entre une quantité totale T(g) du monomère insaturé éthylénique et une vitesse de versement S(g/min).

4. Fines particules de résine réticulées obtenues par séchage de l'émulsion de fines particules de résine réticulées définie dans l'une quelconque des revendications 1, 2 et 3.

5. Fines particules de résine réticulées selon la revendication 4, qui ont un diamètre particulaire moyen compris entre 0,01 µm et 0,03 µm et pour lesquelles lorsque 10g de poudre comprenant les fines particules de résine réticulées et 20 g de poudre de fer sont placés dans la cuve d'un broyeur à billes de verre de 300 ml contenant 5 g de billes de polyamide d'un diamètre de 2 mm, 10 g de billes de polyamide d'un diamètre de 5 mm et 10g de billes de polyamide d'un diamètre de 10 mm et sont agités et mélangés par rotation de la cuve du broyeur à billes à une vitesse de rotation de 100 tr/min pendant 30 minutes et, ensuite, les poudres mélangées sont sorties de la cuve du broyeur à billes et sont observées au microscope électronique, on n'observe pas plus de 2 fines particules de résine réticulées défectueuses sur 20 fines particules de résine réticulées sélectionnées de manière arbitraire dans les poudres mélangées.

6. Procédé de production d'une émulsion de fines particules de résine réticulées produite au moyen de monomères insaturés éthyléniques, qui ne contiennent pas moins de 20% en poids d'un monomère ayant au moins trois groupes insaturés éthyléniques dans une molécule, la solubilité du monomère dans l'eau étant de 5% en poids ou moins (25°C), préalablement émulsifié et dispersé dans un milieu de dispersion contenant de l'eau en tant que composant majeur dudit milieu, où le liquide de dispersion émulsifié est versé goutte à goutte dans un système de réaction de polymérisation comprenant un initiateur de polymérisation pour être soumis à une polymérisation en émulsion ou à une polymérisation sans savon de façon à satisfaire la relation S≤T/60 entre une quantité totale T(g) du monomère insaturé éthylénique et une vitesse de versement S(g/min).

7. Procédé de production de l'émulsion de fines particules de résine réticulées selon la revendication 6, dans lequel le liquide de dispersion émulsifié est séparément versé goutte à goutte dans le système de réaction de polymérisation comprenant un initiateur de polymérisation.

8. Procédé de production de l'émulsion de fines particules de résine réticulées selon la revendication 6, dans lequel 1-80% en poids des monomères insaturés éthyléniques sont préalablement polymérisés et dispersés dans un milieu de dispersion contenant de l'eau en tant que composant majeur dudit milieu et placés dans le système de réaction de polymérisation comprenant un initiateur de polymérisation, puis une quantité restante des monomères insaturés éthyléniques est ajoutée dans l'état préalablement émulsifié et dispersé, et le liquide de dispersion émulsifié est séparément versé progressivement goutte à goutte dans le système de réaction de polymérisation comprenant l'initiateur de polymérisation en l'espace de 30 minutes ou plus de façon à satisfaire la relation S≤T/60 entre une quantité totale T(g) du monomère insaturé éthylénique et une vitesse de versement S(g/min).
